Europäisches Patentamt

European Patent Office

Office européen des brevets

(19)

(11) Numéro de publication: **0 066 521**
**A2**

(12) **DEMANDE DE BREVET EUROPEEN**

(21) Numéro de dépôt: **82401000.3**

(22) Date de dépôt: **01.06.82**

(51) Int. Cl.³: **G 01 N 27/90**

(30) Priorité: **03.06.81 FR 8110984**

(43) Date de publication de la demande:
**08.12.82 Bulletin 82/49**

(84) Etats contractants désignés:
**BE DE GB IT**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Stössel, Alain**
**Les Hauts de Provence Bât. E., Avenue A. Capus**
**F-13090 Aix en Provence(FR)**

(72) Inventeur: **Spriet, Bernard Tour d'Aygosi - Bât. 31**
**Route de Nice 65, Cours Gambetta**
**F-13100 Aix en Provence(FR)**

(74) Mandataire: **Mongrédien, André et al,**
**c/o Brevatome 25, rue de Ponthieu**
**F-75008 Paris(FR)**

(54) **Capteur différentiel pour dispositif de contrôle par courants de Foucault, comprenant deux enroulements sur un mandrin triangulaire.**

(57) Capteur différentiel pour dispositif de contrôle par courants de Foucault.

Ce capteur comprend deux enroulements (5, 6) bobinés sur un mandrin (14) de section triangulaire.

Application au contrôle de tubes à section polygonale, notamment de tubes hexagonaux pour assemblages d'éléments combustibles.

FIG. 4

EP 0 066 521 A2

La présente invention a pour objet un capteur différentiel pour dispositif de contrôle non destructif par courants de Foucault. Elle trouve une application notamment dans le contrôle de tubes hexagonaux aptes à recevoir des assemblages d'éléments combustibles destinés aux réacteurs nucléaires.

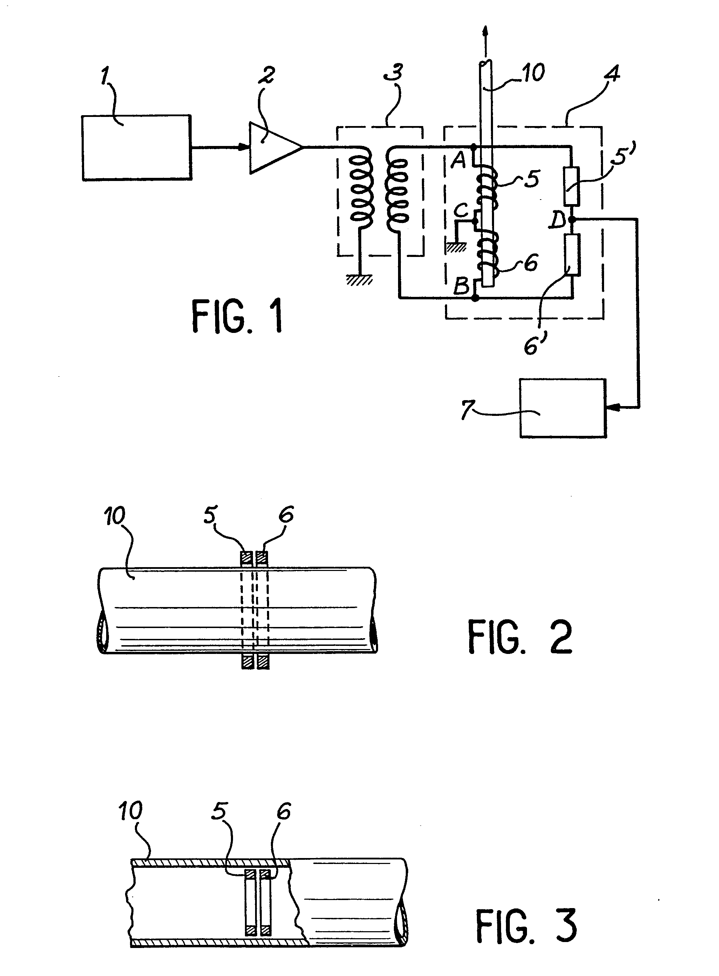

Un dispositif de contrôle par courants de Foucault comporte schématiquement, comme illustré sur la figure 1, un générateur d'onde sinusoïdale 1 qui alimente, via un amplificateur 2, le primaire d'un transformateur 3 dont le secondaire est relié à un pont d'impédance 4. Ce dernier comprend deux enroulements 5 et 6 et deux impédances 5' et 6'. Une pièce à contrôler 10 est placée dans le champ magnétique créé par les enroulements 5 et 6. Elle est le siège de courants induits ou courants de Foucault. Ces courants sont modifiés dans leur phase et leur amplitude par les défauts présents dans la pièce examinée. Un circuit 7 analyse la tension prélevée au point D situé entre les impédances 5' et 6'.

Les deux enroulements 5 et 6 forment ce qu'il est convenu d'appeler un "capteur" ou une "sonde". Par un mécanisme non représenté, ce capteur explore la pièce à contrôler soit que celle-ci soit mobile et le capteur fixe, soit, ce qui est aussi fréquent, que le capteur se déplace le long de la pièce.

Au cours du déplacement relatif du capteur par rapport à la pièce, tout défaut ponctuel agit d'abord sur l'un des enroulements puis sur l'autre. La variation d'impédance qui en résulte provoque un déséquilibre du pont dans un sens puis dans l'autre. La mesure de ce déséquilibre par le circuit d'analyse 7 permet de détecter le défaut et de le caractériser. Comme les deux enroulements 5 et 6 sont sensibles à la pièce à contrôler, la mesure présente un caractère différentiel. Si un seul de ces enroulements était sensible à la pièce à contrôler la mesure serait absolue.

La présente invention se rapporte à la première catégorie d'appareils, de type différentiel.

Pour le contrôle de tubes, les capteurs différentiels employés peuvent comprendre deux enroulements disposés à l'extérieur du tube comme illustré sur la figure 2, ou à l'intérieur comme illustré sur la figure 3. Dans les deux cas, la totalité de la section droite du tube est explorée par le capteur.

La sensibilité d'un capteur est fonction du rapport entre le volume du défaut détecté et le volume de la partie du tube contrôlée par le capteur. De ce fait, l'utilisation de ce type de capteurs est plus particulièrement adaptée au contrôle des tubes de petites dimensions. Pour des tubes de dimensions importantes, le volume de la partie du tube contrôlé devient prohibitive et la sensibilité du capteur tombe à une valeur faible.

Par ailleurs, si le tube à contrôler ne présente pas une section circulaire, la sensibilité du capteur est encore réduite car les enroulements circulaires peuvent se trouver éloignés de certaines parties de la paroi du tube. C'est le cas notamment lorsque le tube à contrôler présente une section polygonale. On rencontre de telles formes par exemple avec les enveloppes pour assemblages d'éléments combustibles destinés aux réacteurs nucléaires. Dans ce cas la section droite du tube est hexagonale.

L'invention a pour but de remédier à ces deux inconvénients en proposant un capteur qui est adapté aux pièces polygonales de grandes dimensions.

A cette fin, le capteur de l'invention est conçu, d'une part, pour n'explorer qu'une fraction de la section du tube (au lieu de la totalité comme dans l'art antérieur), le rapport entre le volume d'un défaut et le volume examiné s'en trouvant augmenté, et, d'autre part, pour présenter une forme adaptée à la section polygonale du tube.

B 7293-3 RS

De façon précise, la présente invention a pour objet un capteur différentiel pour dispositif de contrôle par courants de Foucault, ce capteur comprenant deux enroulements aptes à être déplacés à l'intérieur d'une pièce à contrôler, qui est un tube de section polygonale, ce capteur étant caractérisé en ce que chacun desdits enroulements est bobiné sur un mandrin isolant dont la section droite est un triangle isocèle dont l'angle au sommet est égal à l'un des angles de la section polygonale du tube, le capteur étant disposé dans cet angle.

Lorsque le tube présente une section hexagonale, tous les angles sont égaux à 120° et le mandrin présente ce même angle en son sommet et peut être déplacé dans l'un quelconque des angles du tube. Naturellement si le tube présente plusieurs angles différents on utilisera autant de capteurs pour le contrôler dans sa totalité.

Les caractéristiques de l'invention ressortiront mieux après la description qui suit, d'exemples de réalisation donnés à titre explicatif et nullement limitatif. Cette description se réfère à des dessins annexés qui font suite à ceux des figures 1 à 3 déjà décrites, et sur lesquelles :

- la figure 4 représente un capteur conforme à l'invention adapté aux tubes hexagonaux,
- la figure 5 représente deux coupes du capteur de la figure 4,
- la figure 6 représente une variante dans laquelle les deux enroulements sont diamétralement opposés dans le tube à contrôler,
- la figure 7 représente un mode d'application utilisant plusieurs capteurs fonctionnant en parallèle.

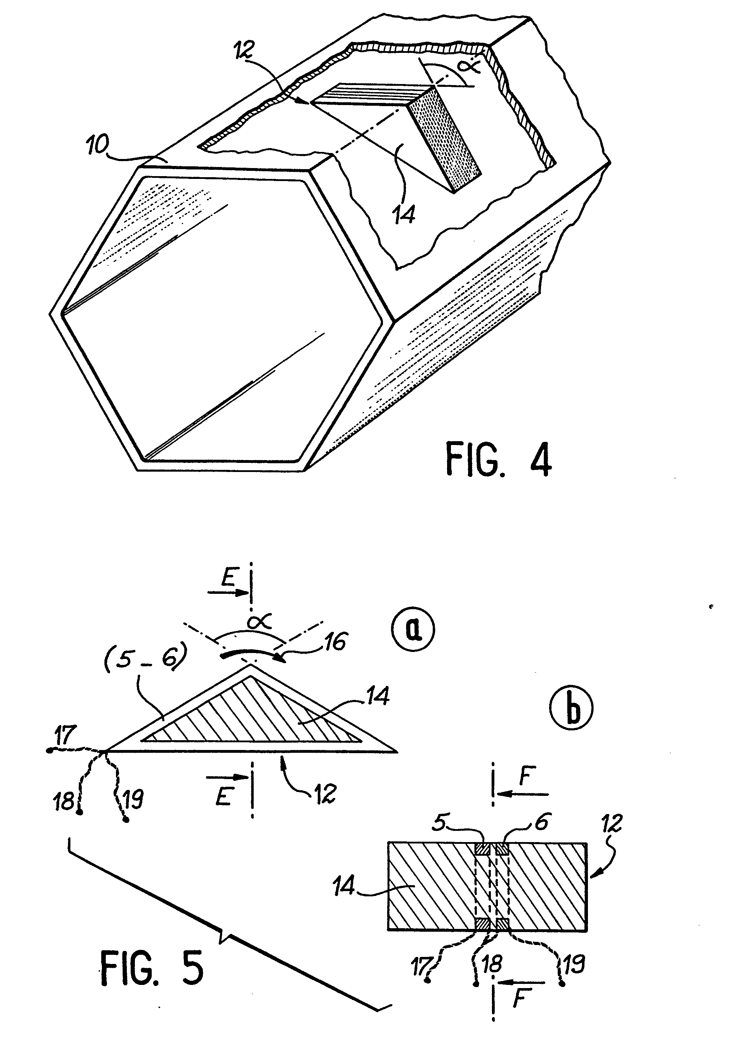

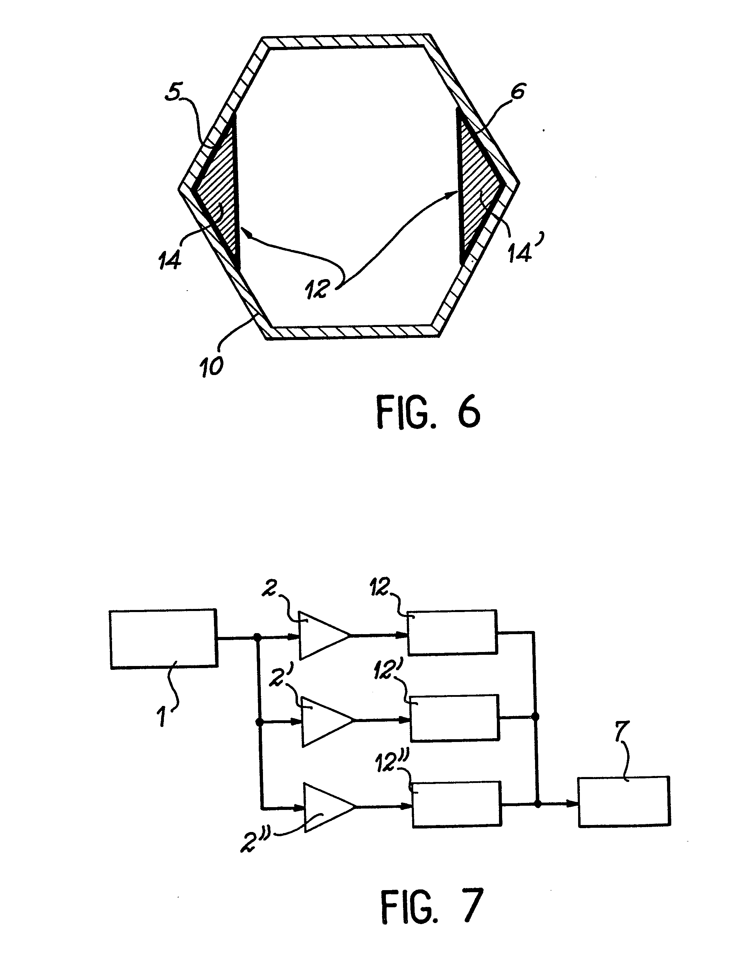

Le capteur représenté sur la figure 4 est spécialement adapté aux tubes hexagonaux. Le capteur porte la référence générale 12. Il est disposé à l'intérieur d'un tube hexagonal 10. La forme de ce capteur est également représentée sur la figure 5 selon deux coupes différentes (coupe FF dans le plan de section droite en a et coupe EE suivant l'arrête en b). Le capteur comprend deux enroulements 5 et 6 bobinés sur un mandrin isolant 14 en forme de triangle isocèle. L'angle au sommet de ce triangle est égal à l'angle formé par deux faces adjacentes du tube hexagonal, en l'occurrence 120°. Les deux enroulements ont une connexion commune 18 et deux connexions indépendantes 17 et 19. Ces connexions sont reliées respectivement aux sommets A, C, B du pont d'impédance de la figure 1. La flèche 16 indique le sens de bobinage des enroulements.

La longueur des côtés du mandrin est au moins égale à la moitié de chaque côté de l'hexagone.

Dans le mode de réalisation illustré sur la figure 6, les deux enroulements 5 et 6 sont séparés et bobinés sur deux mandrins distincts 14 et 14' lesquels peuvent explorer deux zones différentes du tube, par exemple des coins diamétralement opposés.

Cette variante a l'avantage de permettre de contrôler un volume double de celui exploré par le capteur de la figure 4 avec une sensibilité du même ordre de grandeur. En revanche, le rapport entre le signal provenant d'un défaut et le bruit de fond ( qui est en général fonction du volume examiné) est plus faible, car la mesure différentielle effectuée ne concerne plus deux zones proches l'une de l'autre.

Le capteur de l'invention peut être plaqué dans un des angles de la pièce à contrôler au moyen d'un dispositif mécanique classique non représenté. Du fait de la forme du capteur, l'entrefer, c'est-à-dire l'espace capteur-pièce, est réduit à une valeur minimale et reste constant durant toute l'exploration du tube. Cette condition est essentielle pour obtenir un bon rapport signal sur bruit.

Le capteur de l'invention est animé d'un mouvement de translation le long de l'axe du tube grâce à un mécanisme non représenté, car bien connu, qui permet d'explorer le tube sur toute sa longueur.

La totalité d'un tube hexagonal peut être contrôlée en procédant à :

- six passages si le capteur est du type de celui de la figure 4, avec rotation de 60° du tube ou du capteur après chaque passage,

- trois passages si le capteur est du type de celui de la figure 6, avec rotation de 120° après chaque passage.

Le nombre de passages nécessaires peut être réduit si l'on utilise plusieurs capteurs tels que celui de la figure 6 travaillant en parallèle, ce qui suppose que l'appareil de mesure est multivoie. C'est ce qui est représenté sur la figure 7 où l'installation comprend un générateur 1 qui alimente via des amplificateurs 2, 2' et 2" trois capteurs 12, 12' et 12" tels que celui de la figure 6, ces capteurs étant tous trois reliés à un circuit d'analyse 7 à trois voies.

## REVENDICATIONS

1. Capteur différentiel pour dispositif de contrôle par courants de Foucault, ce capteur comprenant deux enroulements (5, 6) aptes à être déplacés à l'intérieur d'une pièce à contrôler (10), laquelle est un tube de section polygonale, caractérisé en ce que chacun desdits enroulements (5, 6) est bobiné sur un mandrin (14, 14') isolant dont la section droite est un triangle isocèle dont l'angle au sommet est égal à l'un des angles de la section polygonale du tube, le capteur étant disposé dans cet angle.

2. Capteur selon la revendication 1, caractérisé en ce que les deux enroulements (5, 6) sont montés côte à côte sur un seul mandrin (14).

3. Capteur selon la revendication 1, caractérisé en ce que les deux enroulements (5, 6) sont montés sur deux mandrins différents, (14, 14'), lesquels sont disposés dans deux angles différents de la section polygonale.

4. Capteur selon la revendication 1, caractérisé en ce que l'angle au sommet du mandrin est de 120°.

5. Capteur pour dispositif de contrôle par courants de Foucault, caractérisé en ce qu'il comprend plusieurs capteurs (12, 12', 12") selon l'une quelconque des revendications 1 à 4, ces capteurs travaillant en parallèle.

B 7293-3 RS

FIG. 1

FIG. 2

FIG. 3

FIG. 4

FIG. 5

FIG. 6

FIG. 7